# EUROPÄISCHE PATENTSCHRIFT

(11) **EP 3 799 675 B1**
(45) Veröffentlichungstag und Bekanntmachung des Hinweises auf die Patenterteilung: **07.12.2022**
(21) Anmeldenummer: 18746633.9
(22) Anmeldetag: 17.07.2018
(51) Int. Cl.: H02M 7/483, H02M 1/084, H04L 12/40, H04Q 11/04

(54) **VERFAHREN ZUM BETRIEB EINER STEUERBAREN ELEKTRISCHEN EINRICHTUNG UND ANORDNUNG MIT DER STEUERBAREN ELEKTRISCHEN EINRICHTUNG**
METHOD FOR OPERATING A CONTROLLABLE ELECTRICAL DEVICE AND ARRANGEMENT WITH THE CONTROLLABLE ELECTRICAL DEVICE
PROCEDE DE COMMANDE D'UN APPAREIL ELECTRIQUE CONTRÔLABLE ET AGENCEMENT AVEC L'APPAREIL ELECTRIQUE CONTRÔLABLE

(43) Veröffentlichungstag der Anmeldung: 07.04.2021
(73) Patentinhaber: Siemens Energy Global GmbH & Co. KG, 81739 München (DE)
(72) Erfinder: BÖHME, Daniel, 90480 Nürnberg (DE); WAHLE, Marcus, 90587 Veitsbronn (DE); EULER, Ingo, 91056 Erlangen (DE); PIERSTORF, Steffen, 90443 Nürnberg (DE); SCHMITT, Daniel, 92353 Postbauer-Heng (DE); SCHREMMER, Frank, 90768 Fürth (DE); STOLTZE, Torsten, 91074 Herzogenaurach (DE)
(86) Internationale Anmeldenummer: PCT/EP2018/069420
(87) Internationale Veröffentlichungsnummer: WO 2020/015823

(56) Entgegenhaltungen:
- EP-A2- 1 892 631
- DE-A1- 10 031 891
- DE-A1-102012 216 469
- DE-U1-202014 004 749
- KR-A- 20130 077 013

## Beschreibung

Die Erfindung betrifft ein Verfahren zum Betreiben einer steuerbaren elektrischen Einrichtung.

Steuerbare elektrische Einrichtungen sind im Allgemeinen solche, die einer Steuerung und/oder einer Regelung durch eine übergeordnete Steuerungseinrichtung zugänglich sind. Beispielsweise kann eine steuerbare elektrische Einrichtung steuerbare Komponenten wie steuerbare Schalter umfassen, so dass die Steuerung der elektrischen Einrichtung durch eine Steuerung der steuerbaren Komponenten erfolgen kann.

Zur Steuerung der elektrischen Einrichtung findet eine Datenkommunikation zwischen der elektrischen Einrichtung und der Steuerungseinrichtung statt. Die Datenkommunikation umfasst üblicherweise Steuerungssignale, die von der Steuerungseinrichtung an die elektrische Einrichtung übermittelt werden. Diese Datenkommunikation kann je nach Anwendung eine Übermittlung von Steuerungssignalen in sehr kurzen Zeitabständen erfordern, die im Bereich von weniger als 100 Mikrosekunden liegen können. Die Datenrate der Datenkommunikation ist hierbei entsprechend hoch.

Insbesondere im Bereich der Hochspannungstechnik sind steuerbare elektrische Einrichtungen oft mit einem elektrischen Netz, beispielsweise einem Versorgungsnetz, verbunden. Oftmals sind die elektrischen Einrichtungen dazu eingerichtet, elektrische Energie bzw. Leistung mit dem Netz auszutauschen, wie zum Beispiel bei Blindleistungskompensationseinrichtungen und dergleichen. Hierbei kann die Steuerungseinrichtung eine Steuerung bzw. Regelung des Energieaustausches zwischen der elektrischen Einrichtung und dem Netz übernehmen. Dies erfordert jedoch wiederum sehr hohe Datenraten der zwischen der elektrischen Einrichtung und der Steuerungseinrichtung zu übermittelten Daten.

Üblicherweise sind steuerbare elektrische Einrichtungen, insbesondere im Bereich der Hochspannungstechnik, relativ kostenintensiv. Mit den hohen Kosten der Herstellung, der Inbetriebnahme und des Betriebes solcher elektrischen Einrichtungen steigt das Interesse an einer möglichst hohen Zuverlässigkeit der Einrichtungen. Auf diese Weise können Kosten für deren Betrieb und Wartung optimiert werden.

Die EP 1 892 631 A2 offenbart ein Verfahren zum Einspeisen von zu übertragenden Daten in einen seriellen Datenbus, bei dem das Auslastungsmaß für den seriellen Datenbus ermittelt wird und in Abhängigkeit von dem ermittelten Auslastungsmaß die zu übertragenden Daten in den seriellen Datenbus eingekoppelt werden oder zurückgehalten werden.

Aus der DE 100 31 891 A1 ist ein Verfahren zum Betrieb von einem an ein Fahrzeugkommunikationsnetz angeschlossenen Gerät bekannt.

Die Aufgabe der Erfindung ist es daher, ein Verfahren zum Betreiben einer steuerbaren elektrischen Einrichtung vorzuschlagen, dass einen möglichst zuverlässigen und zugleich kostengünstigen Betrieb der Einrichtung ermöglicht.

Die Aufgabe wird erfindungsgemäß nach Anspruch 1 durch ein Verfahren zum Betreiben einer steuerbaren elektrischen Einrichtung gelöst, die ein Schaltmodul eines modularen Mehrstufenumrichters ist, und die mittels einer Datenverbindung mit einer Steuerungseinrichtung zum Steuern der elektrischen Einrichtung verbunden ist, wobei die elektrische Einrichtung zum Austausch elektrischer Energie mit einem angeschlossenen elektrischen Netz eingerichtet ist und einen Umgebungssensor zum Erfassen einer Umgebungsinformation umfasst, bei dem die Steuerungseinrichtung mittels der Datenverbindung Steuerungssignale an die elektrische Einrichtung übermittelt, die elektrische Einrichtung in Abhängigkeit von den übermittelten Steuerungssignalen einen ersten oder einen zweiten Betriebszustand einnimmt, wobei in deren ersten Betriebszustand die elektrische Einrichtung Energie mit dem elektrischen Netz austauscht und in deren zweiten Betriebszustand die elektrische Einrichtung keine Energie mit dem elektrischen Netz austauscht, wobei die mittels des Umgebungssensors erfasste Umgebungsinformation über die Datenverbindung an die Steuerungseinrichtung nur dann übermittelt wird, wenn die elektrische Einrichtung sich im zweiten Betriebszustand befindet. Demnach wird erfindungsgemäß ausschließlich der zweite Betriebszustand dazu genutzt, Umgebungsinformationen zu übermitteln. Insbesondere wird keine Umgebungsinformation übermittelt, wenn die elektrische Einrichtung sich im ersten Betriebszustand befindet.

Erfindungsgemäß ist die elektrische Einrichtung mit einem Umgebungssensor ausgestattet, der bestimmte Messdaten aus der Umgebung der elektrischen Einrichtung gewinnen kann. Umgebungsinformation ist in diesem Zusammenhang in der Weise zu verstehen, dass diese nicht den elektrischen Betriebszustand der elektrischen Einrichtung, also beispielsweise einen durch die elektrische Einrichtung bzw. durch ihre Komponenten fließenden Strom oder eine an diesen Komponenten anliegende Spannung umfasst oder aber Zustände der darin enthaltenen Schalter umfasst. Vielmehr handelt es sich bei der Umgebungsinformation um Daten, die aus einer Beobachtung einer Umgebung, insbesondere einer unmittelbaren Umgebung der elektrischen Einrichtung gewonnen werden können. Dies schließt auch Messdatenerfassung außerhalb, innerhalb oder an einem äußeren Gehäuse der elektrischen Einrichtung mit ein. Beispiele hierfür können Temperaturmessungen einer äußeren Temperatur in einer unmittelbaren Umgebung der elektrischen Einrichtung oder Messungen von Schwingungen am Gehäuse. Die Umgebungsinformation wird erfasst und der Steuerungseinrichtung zur Verfügung gestellt. Durch die zusätzliche Information kann vorteilhaft die Zuverlässigkeit der elektrischen Einrichtung erhöht werden. Es wird zum Beispiel insbesondere möglich, einen aktuellen allgemeinen Alterungszustand der elektrischen Einrichtung zu bestimmen und zu bewerten sowie Wartungszyklen zu planen. Im Rahmen der Erfindung ist es selbstverständlich zulässig, wenn nicht jede Phase, während der sich die elektrische Einrichtung im zweiten Betriebszustand befindet, dazu genutzt wird, Umgebungsinformationen zu übermitteln. Vielmehr ist es denkbar, einige ausgewählte der Phasen dazu zu nutzen.

Zugleich werden die Umgebungsinformation und die Steuerungssignale mittels derselben Datenverbindung ausgetauscht bzw. übermittelt. Auf diese Weise können die Kosten der elektrischen Einrichtung vorteilhaft minimiert werden, weil auf eine Zusätzliche Kommunikationsinfrastruktur zur Übermittlung der Umgebungsinformation verzichtet werden kann. Die Übermittlung der Steuerungssignale lastet zwar die Datenverbindung im Allgemeinen voll aus, so dass eine Übermittlung zusätzlicher Umgebungsinformation über dieselbe Datenverbindung ohne weitere Maßnahmen nicht möglich ist. Diesen Aspekt betreffend wurde im Rahmen der Erfindung jedoch erkannt, dass diese Auslastung ungleichmäßig vorliegt, so dass der zweite Betriebszustand der elektrischen Einrichtung eine Möglichkeit bietet, die Datenverbindung auch zur Übermittlung der Umgebungsinformation zu nutzen. Der Grund dafür liegt darin, dass im ersten Betriebszustand, also während die elektrische Einrichtung Energie mit dem angeschlossenen Netz austauscht, eine zeitlich intensive Steuerung durch die Steuerungseinrichtung erfolgen muss, während im zweiten Betriebszustand die elektrische Einrichtung nicht am Energieaustausch teilnimmt, so dass sich diese in einem gewissen inaktiven Zustand befindet und daher zeitlich weniger intensiv gesteuert werden muss. Zusätzlich kann hierbei der Umstand genutzt werden, dass die Umgebungsinformation eine vergleichsweise langsame Änderung erfährt, die nicht in dem Zeitbereich der Steuerungssignale (Millisekundenbereich) liegt. Die Übermittlung der Umgebungsinformation kann jeweils auf Anforderung durch die Steuerungseinrichtung oder auch unaufgefordert erfolgen.

Geeigneterweise übermittelt die elektrische Einrichtung über die Datenverbindung Statusinformationen an die Steuerungseinrichtung. Die Steuerungseinrichtung erzeugt dabei die Steuerungssignale unter Berücksichtigung der Statusinformationen. Die Steuerung der elektrischen Einrichtung erfolgt demnach über eine Rückkopplung und Bereitstellung von Statusinformationen. Die Statusinformationen werden zweckmäßigerweise mittels Strom- und Spannungsmessung gewonnen. Die Steuerung ist auf diese Weise besonders effektiv, wobei der Datenverkehr über die Datenverbindung erhöht ist. Die Statusinformationen werden zweckmäßigerweise in Zeitabständen im Mikrosekundenbereich übermittelt. Dabei ist die entsprechende Übermittlungsrate im ersten Betriebszustand der elektrischen Einrichtung bevorzugt höher als in deren zweitem Betriebszustand.

Gemäß einer Ausführungsform der Erfindung werden die Umgebungsinformationen und die Statusinformationen ineinander abwechselnden Datenpaketen übermittelt. Während sich die elektrische Einrichtung im zweiten Betriebszustand befindet werden demnach die Umgebungsinformation und die Statusinformation in einem Multiplex-Verfahren abwechselnd übermittelt. Damit kann die Umgebungsinformation effizient ohne Einbußen bei der Übermittlungsrate der Statusinformationen zur Verfügung gestellt werden.

In manchen Anwendungen kann es von Vorteil sein, wenn die Umgebungsinformation vor dem Übermitteln an die Steuerungseinrichtung mittels einer Datenverarbeitungseinrichtung bearbeitet und/oder mittels einer Datenspeichereinheit der elektrischen Einrichtung zwischengespeichert wird, wobei die bearbeitete und/oder zwischengespeicherte Umgebungsinformation an die Steuerungseinrichtung übermittelt wird. Bei der Bearbeitung kann es sich beispielsweise um Mittelwertberechnung, Tiefpassfilterung oder dergleichen handeln. Die zeitliche Änderung der Umgebungsmessdaten erfolgt im Allgemeinen vergleichsweise langsam, so dass unter Umständen nicht jeder Messwert übermittelt werden muss. Der Datenverkehr kann auf diese Weise vorteilhaft reduziert werden.

Aus an der elektrischen Einrichtung gemessenen Spannungs- und/oder Stromwerten kann geeigneterweise eine mit dem Netz austauschbare Energiemenge ermittelt werden. Diese Information und/oder auch eine Information über den Betriebszustand der elektrischen Einrichtung (z.B. Betriebszustand eins oder zwei) kann als Statusinformation an die Steuerungseinrichtung übermittelt werden.

Als Umgebungsinformationen kann beispielsweise eine Temperatur, eine mechanische Schwingung, eine Luftfeuchtigkeit und/oder ein Luftdruck an der elektrischen Einrichtung übermittelt werden. Die Umgebungsinformation kann als Übertragung von Einzelmesswerten oder in Datenblöcken erfolgen. Im ersteren Fall wird vorteilhaft die Übertragung von Steuerungssignalen und/oder Statusinformationen nur für eine relativ kurze Zeit unterbrochen. Im letzteren Fall wird vorteilhaft eine relativ hohe Datendichte der Umgebungsinformationen ermöglicht.

Gemäß einer Ausführungsform der Erfindung umfasst die elektrische Einrichtung abschaltbare Halbleiterschalter, wobei die als Statusinformationen Schaltzustände der Halbleiterschalter übermittelt werden.

Bevorzugt umfasst die elektrische Einrichtung einen Energiespeicher, mittels dessen die elektrische Einrichtung in deren ersten Betriebszustand Energie mit dem elektrischen Netz austauscht und der im zweiten Betriebszustand der elektrischen Einrichtung überbrückt ist, so dass kein Energieaustausch zwischen der elektrischen Einrichtung und dem elektrischen Netz stattfindet. Die austauschbare Energiemenge kann in diesem Fall die am Energiespeicher, beispielsweise einem Kondensator, abfallende Spannung sein. Eine Überbrückung des Energiespeichers ist eine besonders einfache Möglichkeit der Realisierung des zweiten Betriebszustandes der elektrischen Einrichtung. Der Spannungszustand des Energiespeichers ändert sich dann besonders schnell, wenn der Energiespeicher Energie aus dem Netz aufnimmt oder in das Netz abgibt. Die schnelle Änderung des Spannungszustandes erfordert wiederum eine hohe Übertragungsrate an Statusinformationen. Ist der Energiespeieher überbrückt, so kann dies zur Übermittlung der Umgebungsinformation genutzt werden.

Die Erfindung betrifft ferner eine Anordnung umfassend eine steuerbare elektrische Einrichtung, die mittels einer Datenverbindung mit einer Steuerungseinrichtung zum Steuern der elektrischen Einrichtung verbunden ist, wobei die elektrische Einrichtung zum Austausch elektrischer Energie mit einem angeschlossenen elektrischen Netz eingerichtet ist, wobei die Steuerungseinrichtung dazu eingerichtet ist, mittels der Datenverbindung Steuerungssignale an die elektrische Einrichtung zu übermitteln, die elektrische Einrichtung dazu eingerichtet ist, in Abhängigkeit von den übermittelten Steuerungssignalen einen ersten oder einen zweiten Betriebszustand einzunehmen, wobei in deren ersten Betriebszustand die elektrische Einrichtung Energie mit dem elektrischen Netz austauschen kann und in deren zweiten Betriebszustand die elektrische Einrichtung keine Energie mit dem elektrischen Netz austauschen kann.

Eine solche Anordnung ist in Form eines modularen Mehrstufenumrichters aus dem Stand der Technik bekannt. Ein modularer Mehrstufenumrichter weist einen modularen Aufbau und umfasst in Reihe miteinander geschaltete Schaltmodule, die jeweils abschaltbare Halbleiterschalter und einen Energiespeicher umfassen. Im Betrieb des modularen Mehrstufenumrichters werden die Energiespeicher der Schaltmodule aufgeladen oder entladen, wobei eine durch eine zentrale Steuerungs- und Regelungseinheit vorgegebene Spannung am Ausgang des Mehrstufenumrichters erzeugt wird.

Die Aufgabe der Erfindung besteht darin, eine artgemäße Anordnung anzugeben, die möglichst zuverlässig und kostengünstig ist.

Die Aufgabe wird bei einer artgemäßen Anordnung nach Anspruch 9 erfindungsgemäß dadurch gelöst, dass die elektrische Einrichtung einen Umgebungssensor zum Erfassen einer Umgebungsinformation umfasst und dazu eingerichtet ist, die mittels des Umgebungssensors erfasste Umgebungsinformation über die Datenverbindung an die Steuerungseinrichtung nur dann zu übermitteln, wenn die elektrische Einrichtung sich im zweiten Betriebszustand befindet.

Das mit der Anordnung verbindbare elektrische Netz kann sowohl ein Wechselspannungsnetz als auch eine Gleichspannungsverbindung bzw. ein Gleichspannungsnetz sein. Die Anordnung kann zudem mit mehreren elektrischen Netzen verbindbar sein. Beispielsweise kann die Anordnung ein Umrichter mit einer Wechselspannungsseite und einer Gleichspannungsseite sein, wobei die Wechselspannungsseite mit einer Wechselspannungsleitung und die Gleichspannungsseite mit einer Gleichspannungsleitung verbindbar sein können. Je nach Konfiguration der Anordnung und deren Steuerung kann der Austausch elektrischer Energie zwischen der elektrischen Einrichtung und dem angeschlossenen elektrischen Netz eine Wirk- und/oder Blindleistungsänderung im Netz bewirken.

Zweckmäßigerweise umfasst die elektrische Einrichtung eine Datenverarbeitungseinrichtung und/oder eine Datenspeichereinheit, wobei die Umgebungsinformation vor dem Übermitteln an die Steuerungseinrichtung mittels einer Datenverarbeitungseinrichtung bearbeitet und/oder mittels einer Datenspeichereinheit der elektrischen Einrichtung zwischengespeichert werden kann, wobei die bearbeitete und/oder zwischengespeicherte Umgebungsinformation an die Steuerungseinrichtung übermittelt werden kann.

Die Vorteile der erfindungsgemäßen Anordnung ergeben sich insbesondere aus den Vorteilen, die bereits zuvor im Zusammenhang mit dem erfindungsgemäßen Verfahren beschrieben worden sind.

Gemäß einer Ausführungsform der Erfindung ist der Umgebungssensor dazu eingerichtet, eine Temperatur, eine mechanische Schwingung, eine Luftfeuchtigkeit und/oder ein Luftdruck an der elektrischen Einrichtung zu erfassen und als Umgebungsinformation der elektrischen Einrichtung zur Verfügung zu stellen. Der Umgebungssensor, wobei auch mehrere Umgebungssensoren denkbar sind, weist vorteilhafterweise eine Schnittstelle auf, die eine Anbindung an die Datenverbindung, zum Beispiel eine Lichtleiterverbindung, ermöglicht.

Bevorzugt umfasst die elektrische Einrichtung abschaltbare Halbleiterschalter, wobei als Statusinformationen Schaltzustände der Halbleiterschalter übermittelt werden können. Die Halbleiterschalter können beispielsweise IGBTs, IGCTs oder dergleichen sein. Die elektrische Einrichtung kann jedoch auch steuerbare Schalter, insbesondere Halbleiterschalter, wie zum Beispiel Thyristoren, umfassen.

Gemäß einer Ausführungsform der Anordnung umfasst die elektrische Einrichtung einen Energiespeicher, mittels dessen die elektrische Einrichtung in deren ersten Betriebszustand Energie mit dem elektrischen Netz austauscht und der im zweiten Betriebszustand der elektrischen Einrichtung überbrückt ist, so dass kein Energieaustausch zwischen der elektrischen Einrichtung und dem elektrischen Netz stattfindet. Der Energiespeicher kann beispielsweise mittels eines geeigneten Überbrückungsschalters überbrückbar sein. Die elektrische Einrichtung kann zum Beispiel Halbleiterschalter und Energiespeicher umfassen, die miteinander in einer dem Fachmann bekannten Halbbrückenschaltung oder Vollbrückenschaltung oder einer funktional entsprechenden Schaltung verbunden sind.

Gemäß einer Ausführungsform der Erfindung liegt die elektrische Einrichtung in deren Betrieb auf einem elektrischen Potenzial von über 1 kV, die Steuerungseinrichtung auf einem elektrischen Potenzial von weniger als 100 V, bevorzugt auf Erdpotenzial, liegt und die Datenverbindung eine Lichtleiterverbindung ist. In einem solchen Fall ist die Lichtleiterverbindung besonders vorteilhaft, weil sie für eine Potenzialtrennung zwischen dem Hochspannungspotenzial und dem Erdpotenzial sorgt. Die Lichtleiterverbindung kann beispielsweise ein Lichtwellenleiter sein.

Gemäß der Erfindung ist die Anordnung ein modularer Mehrstufenumrichter mit einer Vielzahl von Schaltmodulen, und wenigstens eines der Schaltmodule durch die elektrische Einrichtung gegeben ist. Die Schaltmodule sind in einer Reihenschaltung miteinander unter Ausbildung eines Umrichterventils des Mehrstufenumrichters miteinander verbunden. Die Schaltmodule sind einzeln und unabhängig voneinander steuerbar. Eine zentrale Steuerungseinrichtung ist bevorzugt mit jedem der Schaltmodule mittels einer eigenen Datenverbindung, vorzugsweise in Form einer Lichtleiterverbindung, verbunden.

Selbstverständlich können alle im Zusammenhang mit dem erfindungsgemäßen Verfahren beschriebenen Merkmale und Komponenten einzeln oder in Kombination auch im Zusammenhang mit der erfindungsgemäßen Anordnung realisiert werden.

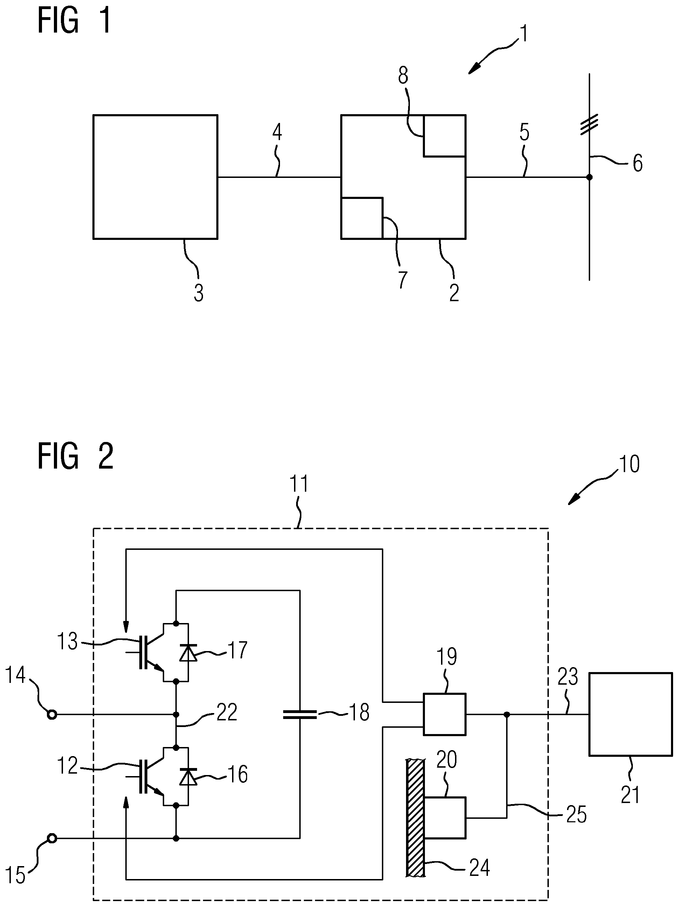

Die Erfindung soll im Folgenden anhand von Ausführungsbeispielen der Figuren 1 und 2 weiter erläutert werden.
Figur 1 zeigt ein erstes Ausführungsbespiel einer erfindungsgemäßen Anordnung in einer schematischen Darstellung;
Figur 2 zeigt ein zweites Ausführungsbeispiel einer erfindungsgemäßen Anordnung in einer schematischen Darstellung.

In Figur 1 ist eine Anordnung 1 mit einer steuerbaren elektrischen Einrichtung 2 und einer Steuerungseinrichtung 3 zum Steuern der elektrischen Einrichtung 2 dargestellt. Die elektrische Einrichtung 2 ist mittels einer Datenverbindung 4 mit der Steuerungseinrichtung 3 verbunden.

Die elektrische Einrichtung 2 ist an ein elektrisches Netz 6, im vorliegenden Ausführungsbeispiel ein Wechselspannungsnetz, mittels einer geeigneten Anschlussvorrichtung 5 angeschlossen. Die elektrische Einrichtung 2 kann dem Netz 6 elektrische Energie entnehmen oder in dieses abgeben. Dabei kann dies sowohl eine Einspeisung von Wirkleistung als auch von Blindleistung in das angeschlossene elektrische Netz bewirken, je nach Konfiguration bzw. Topologie der elektrischen Einrichtung.

Die elektrische Einrichtung 2 umfasst ferner einen ersten Umgebungssensor 7, er an einem Gehäuse der elektrischen Einrichtung 2 befestigt ist und zum Messen einer Temperatur an der elektrischen Einrichtung 2 eingerichtet ist. Zudem umfasst die elektrische Einrichtung einen zweiten Umgebungssensor 8, der innerhalb des Gehäuses angeordnet und zum Messen einer Luftfeuchtigkeit in einer Umgebung der elektrischen Einrichtung 2 geeignet ist

Sowohl der erste als auch der zweite Umgebungssensor sind dazu eingerichtet, die jeweils erfasste Umgebungsinformation mittels der Datenverbindung 4 an die Steuerungseinrichtung 3 zu übermitteln. Der erste Umgebungssensor ist zudem zu einer Vorverarbeitung und Zwischenspeicherung der Umgebungsinformation eingerichtet.

Das erfindungsgemäße Verfahren kann mittels der Anordnung 1 im Folgenden illustriert werden. Die Steuerungseinrichtung 3 sendet über die Datenverbindung 4 ein Steuerungssignal an die elektrische Einrichtung 2. Die elektrische Einrichtung 2 nimmt in Abhängigkeit vom Steuerungssignal einen ersten Betriebszustand ein, in dem sie mit dem Netz Energie austauscht, oder einen zweiten Betriebszustand, in dem sie keine Energie mit dem Netz austauscht. Nur in dem Fall, dass die elektrische Einrichtung 2 den zweiten Betriebszustand einnimmt, werden die von den beiden Umgebungssensoren bereitgestellten Umgebungsinformationen über die Datenverbindung 4 an die Steuerungseinrichtung 3 übermittelt.

Figur 2 zeigt eine Anordnung 10 mit einer elektrischen Einrichtung 11 und einer Steuerungseinrichtung 21. Die elektrische Einrichtung 11 umfasst zwei abschaltbare Halbleiterschalter 12, 13 sowie einen Energiespeicher 18, die miteinander in einer Halbbrückenschaltung verbunden sind. Der erste Halbleiterschalter 12 ist in einem Brückenzweig 22 zwischen einem ersten und einem zweiten Anschluss 14 bzw. 15 der elektrischen Einrichtung 11 angeordnet. Mittels des ersten Halbleiterschalters 12 kann der Energiespeicher 18 überbrückt werden. Die Anschlüsse 14 bzw. 15 dienen zur Verbindung der elektrischen Einrichtung 11 mit weiteren elektrischen Einrichtungen gleicher Art und/oder mit einem oder mehreren elektrischen Netzen (in Figur 2 figürlich nicht dargestellt). Parallel zum ersten Halbleiterschalter 12 sind der zweite Halbleiterschalter 13 und der Energiespeicher 18 angeordnet. Dem ersten Halbleiterschalter 12 ist eine erste Freilaufdiode 16 und dem zweiten Halbleiterschalter 13 ist eine zweite Freilaufdiode 17 antiparallel geschaltet.

Die elektrische Einrichtung 11 umfasst ferner eine Ansteuerbaugruppe 19, die die Ansteuerung der beiden Halbleiterschalter 12, 13 übernimmt. Die Ansteuerbaugruppe 19 ist eingangsseitig an eine Datenverbindung in Form einer Lichtleiterverbindung 23 angeschlossen und mittels der Lichtleiterverbindung 23 mit einer Steuerungseinrichtung 21 verbunden. Die Steuerungseinrichtung 21 übermittelt an die elektrische Einrichtung 11 Steuerungssignale und empfängt zugleich Statusinformationen von der elektrischen Einrichtung 11. Die Statusinformationen umfassen Informationen über die Schaltzustände der Halbleiterschalter 12, 13 ("leitend" oder "gesperrt") sowie eine Spannung am Energiespeicher 18. Weitere Statusinformationen können eine Spannung an den Anschlüssen 14, 15 oder ein Strom durch die elektrische Einrichtung 11 sein.

Die elektrische Einrichtung 11 kann einen ersten Betriebszustand einnehmen, in dem der erste Halbleiterschalter 12 gesperrt ist. In diesem ersten Betriebszustand kann die elektrische Einrichtung 11 je nach Polarität des Stromes bzw. der Spannung mittels des Energiespeichers 18 elektrische Energie dem angeschlossenen elektrischen Netz entnehmen oder in das Netz abgeben. Die elektrische Einrichtung 11 kann darüber hinaus einen zweiten Betriebszustand einnehmen, in dem der erste Halbleiterschalter 12 leitend ist. In diesem zweiten Betriebszustand ist der Energiespeicher 18 überbrückt, so dass kein Energieaustausch mit dem angebundenen Netz stattfindet.

Im ersten Betriebszustand liegen große Spannungs- und Stromänderungen vor. Entsprechend müssen insbesondere die Statusinformationen im ersten Betriebszustand in relativ kleinen Zeitabständen, also mit einer hohen Datenrate, übermittelt werden. Im ersten Betriebszustand bewirkt dies eine hohe Auslastung der Datenverbindung 23. Im zweiten Betriebszustand ist die Auslastung der Datenverbindung 23 entsprechend geringer.

Die elektrische Einrichtung 11 umfasst des Weiteren einen Umgebungssensor 20. Der Umgebungssensor 20 ist räumlich außen an einem Gehäuse 24 der elektrischen Einrichtung 11 befestigt. Der Umgebungssensor 20 besteht in dem hier dargestellten Beispiel aus mehreren Sensorkomponenten und ist dazu eingerichtet, eine Temperatur, eine Luftfeuchtigkeit, einen Luftdruck sowie Schwingungen am Gehäuse 24 zu erfassen und als Umgebungsinformation zur Verfügung zu stellen. Der Umgebungssensor weist eine Schnittstelle 25 auf, die es ermöglicht, den Umgebungssensor 20 an die Lichtleiterverbindung 23 anzubinden. Damit kann die Umgebungsinformation an die Steuerungseinrichtung 21 mittels der Lichtleiterverbindung übermittelt werden. Alternativ kann der Umgebungssensor 20 mit der Ansteuerbaugruppe 19 verbunden sein, so dass die Umgebungsinformation über die Ansteuerbaugruppe 19 an die Steuerungseinrichtung 21 gesendet werden kann. Die Ansteuerbaugruppe 19 kann zudem die Funktion einer Datenverarbeitungseinheit übernehmen, mittels der die Umgebungsinformation vorverarbeitet und/oder zwischengespeichert werden kann.

Wird an die Steuerungseinrichtung 21 die Statusinformation übermittelt, aus der hervorgeht, dass die elektrische Einrichtung 11 sich im zweiten Betriebszustand befindet, so übermittelt die Steuerungseinrichtung 21 eine Anforderung an die elektrische Einrichtung 11, die Umgebungsinformation zu senden. Die Umgebungsinformation wird beispielsweise auf ein erstes und ein drittes Datenpaket verteilt. Diese beiden Datenpakete werden dann abwechselnd mit einem zweiten und einem vierten Datenpaket, die jeweils Statusinformationen enthalten, an die Steuerungseinrichtung 21 übermittelt (also in der Reihenfolge: erstes, zweites, drittes, viertes Datenpaket).

Nimmt zu einem späteren Zeitpunkt die elektrische Einrichtung 11 den ersten Betriebszustand ein, so wird die Übermittlung der Umgebungsinformationen nicht fortgesetzt, bis die elektrische Einrichtung wiederum in den zweiten Betriebszustand wechselt.

## Patentansprüche

1. Verfahren zum Betreiben einer steuerbaren elektrischen Einrichtung (2), die ein Schaltmodul eines modularen Mehrstufenumrichters ist, und die mittels einer Datenverbindung (4) mit einer Steuerungseinrichtung (3) zum Steuern der elektrischen Einrichtung (2) verbunden ist, wobei die elektrische Einrichtung (2) zum Austausch elektrischer Energie mit einem angeschlossenen elektrischen Netz (6) eingerichtet ist und einen Umgebungssensor (7, 8) zum Erfassen einer Umgebungsinformation umfasst,
bei dem
die Steuerungseinrichtung (3) mittels der Datenverbindung (4) Steuerungssignale an die elektrische Einrichtung (2) übermittelt,
die elektrische Einrichtung (2) in Abhängigkeit von den übermittelten Steuerungssignalen einen ersten oder einen zweiten Betriebszustand einnimmt, wobei in deren ersten Betriebszustand die elektrische Einrichtung (2) Energie mit dem elektrischen Netz (6) austauscht und in deren zweiten Betriebszustand die elektrische Einrichtung (2) keine Energie mit dem elektrischen Netz (6) austauscht,
**dadurch gekennzeichnet, dass**
die mittels des Umgebungssensors (7, 8) erfasste Umgebungsinformation über die Datenverbindung (4) an die Steuerungseinrichtung (3) nur dann übermittelt wird, wenn die elektrische Einrichtung (2) sich im zweiten Betriebszustand befindet.

2. Verfahren nach Anspruch 1, wobei die elektrische Einrichtung (2) über die Datenverbindung (4) Statusinformationen an die Steuerungseinrichtung (3) übermittelt und die Steuerungseinrichtung (3) die Steuerungssignale unter Berücksichtigung der Statusinformationen erzeugt.

3. Verfahren nach Anspruch 2, wobei im zweiten Betriebszustand die Umgebungsinformationen und die Statusinformationen in einander abwechselnden Datenpaketen übermittelt werden.

4. Verfahren nach einem der vorangehenden Ansprüche, wobei die Umgebungsinformation vor dem Übermitteln an die Steuerungseinrichtung (3) mittels einer Datenverarbeitungseinrichtung (7) bearbeitet und/oder mittels einer Datenspeichereinheit (7) der elektrischen Einrichtung (2) zwischengespeichert wird, wobei die bearbeitete und/oder zwischengespeicherte Umgebungsinformation an die Steuerungseinrichtung (3) übermittelt wird.

5. Verfahren nach einem der vorangehenden Ansprüche, wobei als Statusinformation eine mit dem Netz (6) austauschbare Energiemenge und/oder eine Information über den Betriebszustand der elektrischen Einrichtung (2) übermittelt werden.

6. Verfahren nach einem der vorangehenden Ansprüche, wobei als Umgebungsinformationen eine Temperatur, eine mechanische Schwingung, eine Luftfeuchtigkeit und/oder ein Luftdruck an der elektrischen Einrichtung (2) übermittelt werden.

7. Verfahren nach einem der vorangehenden Ansprüche, wobei die elektrische Einrichtung (11) abschaltbare Halbleiterschalter (12, 13) umfasst, wobei die als Statusinformationen Schaltzustände der Halbleiterschalter (12, 13) übermittelt werden.

8. Verfahren nach einem der vorangehenden Ansprüche, wobei die elektrische Einrichtung (11) einen Energiespeicher (18) umfasst, mittels dessen die elektrische Einrichtung (11) in deren ersten Betriebszustand Energie mit dem elektrischen Netz austauscht, und der im zweiten Betriebszustand der elektrischen Einrichtung (11) überbrückt ist, so dass kein Energieaustausch zwischen der elektrischen Einrichtung (11) und dem elektrischen Netz stattfindet.

9. Anordnung (1) umfassend eine Steuerungseinrichtung (3)und eine steuerbare elektrische Einrichtung (2), die mittels einer Datenverbindung (4) mit der Steuerungseinrichtung (3) zum Steuern der elektrischen Einrichtung (2) verbunden ist, wobei die elektrische Einrichtung (2) zum Austausch elektrischer Energie mit einem angeschlossenen elektrischen Netz (6) eingerichtet ist, wobei die Steuerungseinrichtung (3) dazu eingerichtet ist, mittels der Datenverbindung (4) Steuerungssignale an die elektrische Einrichtung (2) zu übermitteln,
die elektrische Einrichtung (2) dazu eingerichtet ist, in Abhängigkeit von den übermittelten Steuerungssignalen einen ersten oder einen zweiten Betriebszustand einzunehmen, wobei in deren ersten Betriebszustand die elektrische Einrichtung Energie mit dem elektrischen Netz (6) austauschen kann und in deren zweiten Betriebszustand die elektrische Einrichtung (2) keine Energie mit dem elektrischen Netz (6) austauschen kann, wobei die Anordnung (1) ein modularer Mehrstufenumrichter mit einer Vielzahl von Schaltmodulen ist, und wenigstens eines der Schaltmodule durch die elektrische Einrichtung gegeben ist,
d**adurch gekennzeichnet**, dass
die elektrische Einrichtung (2) einen Umgebungssensor (7, 8) zum Erfassen einer Umgebungsinformation umfasst und dazu eingerichtet ist, die mittels des Umgebungssensors (7, 8) erfasste Umgebungsinformation über die Datenverbindung (4) an die Steuerungseinrichtung (3) nur dann zu übermitteln, wenn die elektrische Einrichtung (2) sich im zweiten Betriebszustand befindet.

10. Anordnung (1) nach Anspruch 9, wobei die elektrische Einrichtung (2) eine Datenverarbeitungseinrichtung (7) und/oder eine Datenspeichereinheit (7) umfasst, wobei die Umgebungsinformation vor dem Übermitteln an die Steuerungseinrichtung (3) mittels einer Datenverarbeitungseinrichtung (7) bearbeitet und/oder mittels einer Datenspeichereinheit (7) der elektrischen Einrichtung zwischengespeichert werden kann, wobei die bearbeitete und/oder zwischengespeicherte Umgebungsinformation an die Steuerungseinrichtung (3) übermittelt werden kann.

11. Anordnung (1) nach einem der Ansprüche 9 oder 10, wobei der Umgebungssensor (7, 8) dazu eingerichtet ist, eine Temperatur, eine mechanische Schwingung, eine Luftfeuchtigkeit und/oder ein Luftdruck an der elektrischen Einrichtung (2) zu erfassen und als Umgebungsinformation der elektrischen Einrichtung (2) zur Verfügung zu stellen.

12. Anordnung (10) nach einem der Ansprüche 9 bis 11, wobei die elektrische Einrichtung (11) abschaltbare Halbleiterschalter (12, 13) umfasst, wobei als Statusinformationen Schaltzustände der Halbleiterschalter (12, 13) übermittelt werden können.

13. Anordnung (10) nach einem der Ansprüche 9 bis 12, wobei die elektrische Einrichtung (11) einen Energiespeicher (18) umfasst, mittels dessen die elektrische Einrichtung (11) in deren ersten Betriebszustand Energie mit dem elektrischen Netz austauscht und der im zweiten Betriebszustand der elektrischen Einrichtung überbrückt ist, so dass kein Energieaustausch zwischen der elektrischen Einrichtung (11) und dem elektrischen Netz stattfindet.

14. Anordnung (1) nach einem der Ansprüche 9 bis 13, wobei die elektrische Einrichtung (2) in deren Betrieb auf einem elektrischen Potenzial von über 1 kV liegt, die Steuerungseinrichtung (3) auf einem elektrischen Potenzial von weniger als 100 V liegt und die Datenverbindung eine Lichtleiterverbindung ist.

## Claims

1. Method for operating a controllable electrical device (2), which is a switching module of a modular multilevel converter, and which is connected, by means of a data link (4), to a control device (3) for controlling the electrical device (2), wherein the electrical device (2) is designed to exchange electrical energy with a connected electrical power supply system (6) and comprises an environmental sensor (7, 8) for detecting environmental information,
in which
the control device (3) transmits, by means of the data link (4), control signals to the electrical device (2),
the electrical device (2) assumes, depending on the transmitted control signals, a first or a second operating state, wherein, in its first operating state, the electrical device (2) exchanges energy with the electrical power supply system (6), and, in its second operating state, the electrical device (2) does not exchange any energy with the electrical power supply system (6),
**characterized in that**
the environmental information detected by means of the environmental sensor (7, 8) is transmitted via the data link (4) to the control device (3) only when the electrical device (2) is in the second operating state.

2. Method according to Claim 1, wherein the electrical device (2) transmits, via the data link (4), status information to the control device (3), and the control device (3) generates the control signals taking into consideration the status information.

3. Method according to Claim 2, wherein, in the second operating state, the environmental information and the status information are transmitted in mutually alternating data packets.

4. Method according to one of the preceding claims, wherein the environmental information, prior to being transmitted to the control device (3), is processed by means of a data processing device (7) and/or is buffer-stored by means of a data storage unit (7) of the electrical device (2), wherein the processed and/or buffer-stored environmental information is transmitted to the control device (3).

5. Method according to one of the preceding claims, wherein, as status information, a quantity of energy which can be exchanged with the power supply system (6) and/or information on the operating state of the electrical device (2) is transmitted.

6. Method according to one of the preceding claims, wherein, as environmental information, a temperature, a mechanical vibration, an air humidity and/or an air pressure at the electrical device (2) is transmitted.

7. Method according to one of the preceding claims, wherein the electrical device (11) comprises semiconductor switches (12, 13) which can be switched off, wherein the switching states of the semiconductor switches (12, 13), as status information, are transmitted.

8. Method according to one of the preceding claims, wherein the electrical device (11) comprises an energy store (18), by means of which the electrical device (11), in its first operating state, exchanges energy with the electrical power supply system, and which, in the second operating state of the electrical device (11), is bypassed, with the result that there is no energy exchange between the electrical device (11) and the electrical power supply system.

9. Assembly (1) comprising a control device (3) and a controllable electrical device (2), which is connected, by means of a data link (4), to the control device (3) for controlling the electrical device (2), wherein the electrical device (2) is designed to exchange electrical energy with a connected electrical power supply system (6), wherein
the control device (3) is designed to transmit, by means of the data link (4), control signals to the electrical device (2),
the electrical device (2) is designed to assume, depending on the transmitted control signals, a first or a second operating state, wherein, in its first operating state, the electrical device can exchange energy with the electrical power supply system (6), and, in its second operating state, the electrical device (2) cannot exchange any energy with the electrical power supply system (6), wherein the assembly (1) is a modular multilevel converter comprising a multiplicity of switching modules, and at least one of the switching modules is provided by the electrical device,
**characterized in that**
the electrical device (2) comprises an environmental sensor (7, 8) for detecting environmental information and is designed to transmit the environmental information detected by means of the environmental sensor (7, 8) via the data link (4) to the control device (3) only when the electrical device (2) is in the second operating state.

10. Assembly (1) according to Claim 9, wherein the electrical device (2) comprises a data processing device (7) and/or a data storage unit (7), wherein the environmental information, prior to being transmitted to the control device (3), can be processed by means of a data processing device (7) and/or can be buffer-stored by means of a data storage unit (7) of the electrical device, wherein the processed and/or buffer-stored environmental information can be transmitted to the control device (3).

11. Assembly (1) according to one of Claims 9 and 10, wherein the environmental sensor (7, 8) is designed to detect a temperature, a mechanical vibration, an air humidity and/or an air pressure at the electrical device (2) and to make this information available, as environmental information, to the electrical device (2).

12. Assembly (10) according to one of Claims 9 to 11, wherein the electrical device (11) comprises semiconductor switches (12, 13) which can be switched off, wherein, as status information, switching states of the semiconductor switches (12, 13) can be transmitted.

13. Assembly (10) according to one of Claims 9 to 12, wherein the electrical device (11) comprises an energy store (18), by means of which the electrical device (11), in its first operating state, exchanges energy with the electrical power supply system, and which, in the second operating state of the electrical device, is bypassed, with the result that there is no energy exchange between the electrical device (11) and the electrical power supply system.

14. Assembly (1) according to one of Claims 9 to 13, wherein, during operation, the electrical device (2) is at an electrical potential of over 1 kV, the control device (3) is at an electrical potential of less than 100 V, and the data link is a fibre-optic conductor link.

## Revendications

1. Procédé pour faire fonctionner un dispositif (2) électrique pouvant être commandé, qui est un module de coupure d'un convertisseur modulaire à plusieurs étages et qui, au moyen d'une liaison (4) de données, est relié à un dispositif (3) de commande du dispositif (2) électrique, dans lequel le dispositif (2) électrique est conçu pour l'échange d'énergie électrique avec un réseau (6) électrique raccordé et comprend un capteur (7, 8) d'environnement pour la détection d'une information d'environnement,
dans lequel
le dispositif (3) de commande transmet, au moyen de la liaison (4) de données, des signaux de commande au dispositif (2) électrique,
le dispositif (2) électrique prend, en fonction des signaux de commande transmis, un premier ou un deuxième état de fonctionnement, dans lequel, dans le premier état de fonctionnement, le dispositif (2) électrique échange de l'énergie avec le réseau (6) électrique et, dans son deuxième état de fonctionnement, le dispositif (2) électrique n'échange pas d'énergie avec le réseau (6) électrique,
**caractérisé en ce que**
on ne transmet, au dispositif (3) de commande, par la liaison (4) de données, l'information d'environnement détectée, au moyen du capteur (7, 8) d'environnement, que lorsque le dispositif (2) électrique se trouve dans le deuxième état de fonctionnement.

2. Procédé suivant la revendication 1, dans lequel le dispositif (2) électrique transmet, par l'intermédiaire de la liaison (4) de données, des informations d'état au dispositif (3) de commande, et le dispositif (3) de commande produit les signaux de commande en tenant compte des informations d'état.

3. Procédé suivant la revendication 2, dans lequel, dans le deuxième état de fonctionnement, on transmet les informations d'environnement et les informations d'état dans des paquets de données alternant les uns les autres.

4. Procédé suivant l'une des revendications précédentes, dans lequel on traite, au moyen d'un dispositif (7) de traitement de données, l'information d'environnement avant la transmission au dispositif (3) de commande et/ou on la met en mémoire tampon, au moyen d'une unité (7) de mémoire de données du dispositif (2) électrique, dans lequel on transmet au dispositif (3) de commande l'information d'environnement traitée et/ou mise en mémoire tampon.

5. Procédé suivant l'une des revendications précédentes, dans lequel on transmet, comme information d'état, une quantité d'énergie pouvant être échangée avec le réseau (6) et/ou une information sur l'état de fonctionnement du dispositif (2) électrique.

6. Procédé suivant l'une des revendications précédentes, on transmet au dispositif (2) électrique comme informations d'environnement, une température, une vibration mécanique, une humidité de l'air et/ou une pression de l'air.

7. Procédé suivant l'une des revendications précédentes, dans lequel le dispositif (11) électrique comprend des interrupteurs (12, 13) à semiconducteur pouvant être ouverts, dans lequel on transmet, comme informations d'état, les états de coupure des interrupteurs (12, 13) à semiconducteur.

8. Procédé suivant l'une des revendications précédentes, dans lequel le dispositif (11) électrique comprend un accumulateur (18) d'énergie au moyen duquel le dispositif (11) électrique échange, dans son premier état de fonctionnement, de l'énergie avec le réseau électrique et qui est court-circuité, dans le deuxième état de fonctionnement du dispositif (11) électrique, de manière à ce qu'un échange d'énergie n'ait pas lieu entre le dispositif (11) électrique et le réseau électrique.

9. Montage (1) comprenant un dispositif (3) de commande et un dispositif (2) électrique pouvant être commandé, qui est, pour la commande du dispositif (2) électrique, relié au dispositif (3) de commande au moyen d'une liaison (4) de données, dans lequel le dispositif (2) électrique est conçu pour l'échange d'énergie électrique avec un réseau (6) électrique raccordé, dans lequel le dispositif (3) de commande est conçu pour transmettre au dispositif (2) électrique des signaux de commande au moyen de la liaison (4) de données,
le dispositif (2) électrique est conçu pour prendre, en fonction des signaux de commande transmis, un premier ou un deuxième état de fonctionnement, dans lequel, dans le premier état de fonctionnement, le dispositif électrique peut échanger de l'énergie avec le réseau (6) électrique et, dans son deuxième état de fonctionnement, le dispositif (2) électrique ne peut pas échanger d'énergie avec le réseau (6) électrique, dans lequel le montage (1) est un convertisseur modulaire à plusieurs étages ayant une pluralité de modules de coupure, et au moins l'un des modules de coupure est donné par le dispositif électrique,
**caractérisé en ce que**
le dispositif (2) électrique comprend un capteur (7, 8) d'environnement de détection d'une information d'environnement et est conçu pour ne transmettre, au dispositif (3) de commande, par l'intermédiaire de la liaison (4) de données, l'information d'environnement, détectée au moyen du capteur (7, 8) d'environnement, que lorsque le dispositif (2) électrique se trouve dans le deuxième état de fonctionnement.

10. Montage (1) suivant la revendication 9, dans lequel le dispositif (2) électrique comprend un dispositif (7) de traitement de données et/ou une unité (7) de mise en mémoire de données, dans lequel l'information d'environnement peut être traitée au moyen d'un dispositif (7) de traitement de données, avant la transmission au dispositif (3) de commande et/ou peut être mise en mémoire tampon au moyen d'une unité (7) de mise en mémoire de données du dispositif électrique, l'information d'environnement traitée et/ou mise en mémoire tampon pouvant être transmise au dispositif (3) de commande.

11. Montage (1) suivant l'une des revendications 9 ou 10, dans lequel le capteur (7, 8) d'environnement est conçu pour détecter une température, une vibration mécanique, une humidité de l'air et/ou une pression de l'air au dispositif (2) électrique et la mettre à disposition comme information d'environnement du dispositif (2) électrique.

12. Montage (10) suivant l'une des revendications 9 à 11, dans lequel le dispositif (11) électrique comprend des interrupteurs (12, 13) à semiconducteur pouvant être ouverts, dans lequel on peut transmettre, comme informations d'état, des états de coupure des interrupteurs (12, 13) à semiconducteur.

13. Montage (10) suivant l'une des revendications 9 à 12, dans lequel le dispositif (11) électrique comprend un accumulateur (18) d'énergie, au moyen duquel le dispositif (11) électrique échange, dans son premier état de fonctionnement, de l'énergie avec le réseau électrique et qui est shunté, dans le deuxième état de fonctionnement du dispositif électrique, de manière à ce qu'un échange d'énergie entre le dispositif (11) électrique et le réseau n'ait pas lieu.

14. Montage (1) suivant l'une des revendications 9 à 13, dans lequel le dispositif (2) électrique, dans son fonctionnement, est à un potentiel électrique supérieur à 1 kV, le dispositif (3) de commande est à un potentiel électrique de moins de 100 V et la liaison de données est une liaison par fibre optique.
